Europäisches Patentamt

European Patent Office

Office européen des brevets

(11) Publication number: **0 318 972 B1**

# EUROPEAN PATENT SPECIFICATION

(45) Date of publication of patent specification: **03.02.93**   (51) Int. Cl.5: **G01C  19/56**

(21) Application number: **88120004.2**

(22) Date of filing: **30.11.88**

(54) Vibrating gyro and driving method thereof.

(30) Priority: **30.11.87 JP 302541/87**

(43) Date of publication of application:
**07.06.89 Bulletin  89/23**

(45) Publication of the grant of the patent:
**03.02.93 Bulletin  93/05**

(84) Designated Contracting States:
**DE FR GB**

(56) References cited:
**EP-A- 0 171 378**
**US-A- 4 479 098**

**PATENT ABSTRACTS OF JAPAN, vol. 11, no. 319 (P-627)[2766], 17th October 1987; & JP-A-62 106 314 (TOKYO KOKU KEIKI K.K.) 16-05-1987**

**ELECTRONICS, vol. 41, no. 12, 10th June 1968, pages 130-134; W.D. GATES: "Vibrating angular rate sensor may threaten the gyroscope"**

(73) Proprietor: **NEC HOME ELECTRONICS, LTD.**
**5-24, Miyahara 3-chome Yodogawa-ku**
**Osaka-Shi Osaka(JP)**

Proprietor: **NEC CORPORATION**
**7-1, Shiba 5-chome Minato-ku**
**Tokyo 108-01(JP)**

(72) Inventor: **Konno, Masashi**
**Yamagata University No. 3-16, Jonan**
**4-chome**
**Yonezawa-shi Yamagata(JP)**
Inventor: **Yamada, Hiroaki**
**c/o NEC Corp. No. 33-1, Shiba 5-chome**
**Minato-ku Tokyo(JP)**
Inventor: **Kumasaka, Toru c/o NEC Home**
**Electronics Ltd.**
**No. 5-24, Miyahara 3-chome Yodogawa-ku**
**Osaka-shi Osaka(JP)**
Inventor: **Fujimura, Seiichi c/o NEC Home**
**Electronics Ltd.**
**No. 5-24, Miyahara 3-chome Yodogawa-ku**
**Osaka-shi Osaka(JP)**

(74) Representative: **Diehl, Hermann Dr. et al**
**Diehl & Glaeser, Hiltl & Partner Flüggen-**
**strasse 13**
**W-8000 München 19(DE)**

## Description

The present invention relates to a vibration gyro in accordance with the precharacterising clause of claim 1 and a driving method in accordance with claim 5.

Vibration gyros of said kind are disclosed in the PATENT ABSTRACTS OF JAPAN, vol. 11, no. 319 (P-627) 2766 , 17.10.1987 (& JP-A-62 106 314) and in the EP-A-0 171 378.

Vibrating gyros operate on the principle that Coriolis force is generated when angular velocity is exerted upon a moving object. Stated more specifically, when angular velocity is applied to a vibrating object, Coriolis force is created and the amount of this force is detected as the displacement of the object, thereby determining the angular velocity that has been exerted upon the object.

The operation of one type of vibrating gyro, an H-type gyro, is described hereinafter with reference to Fig. 2: a driving piezoelectric device 1 is driven to vibrate a resonator 3 in the X-direction; when angular velocity $\Omega$ around the Z-axis is exerted upon the vibrating resonator 3, Coriolis force is created in the resonator 3 in the Y-direction to produce bending vibrations in the resonator 3 in the Y-direction; this bending vibration in the Y-direction is detected by a Coriolis-force-detecting piezoelectric device 2, and the angular velocity $\Omega$ exerted upon the resonator 3 is calculated on the basis of the detected Coriolis force. Symbols of a plus ( + ) and minus (-) in Fig. 2 indicate polarity of the piezoelectric devices. For example, when the driving piezoelectric devices 1 are driven with the same voltage, a displacement generated in the piezoelectric device marked with the plus has a reverse direction to that in the piezoelectric device marked with the minus.

In the prior art vibrating gyro the piezoelectric device 1 is driven by supplying it with AC voltage having a constant amplitude.

When angular velocity $\Omega$ around the Z-axis is applied to an object having mass M which is moving at velocity U in the X-Y plane, Coriolis force G is produced as expressed by:

$$G = - 2 M \Omega U.$$

In order for the angular velocity $\Omega$ to have certain proportionality with respect to the Coriolis force G, the velocity U of the moving object must be constant. In other words, the resonator must be vibrated at constant vibrating speed in order to ensure that the angular velocity applied to the vibrating gyro can be measured with high precision from the detected Coriolis force.

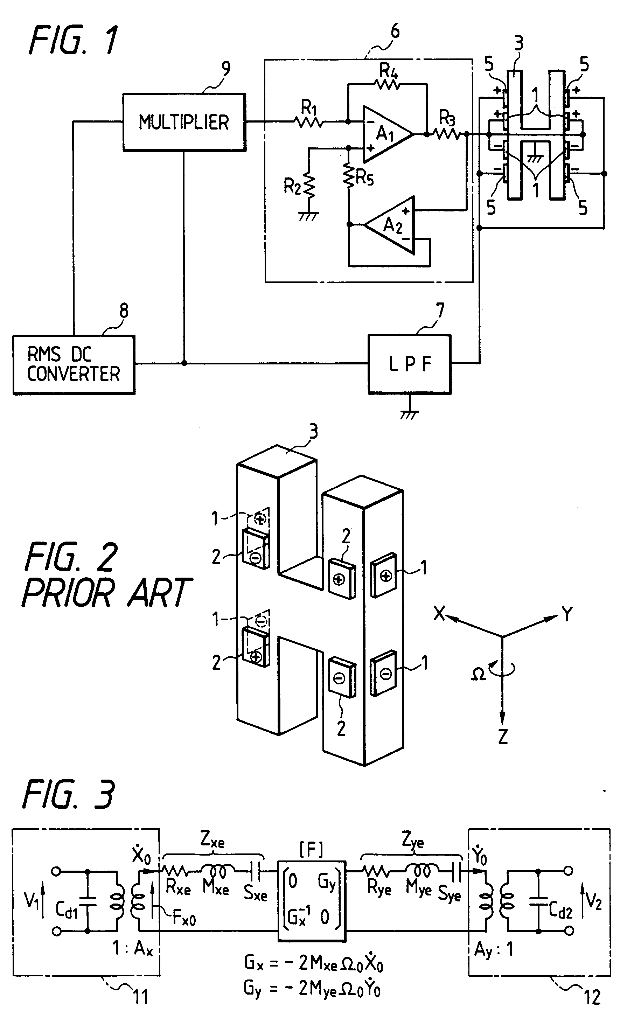

However, when the angular velocity is applied to the vibrating gyro, its mechanical impedance will change. It has therefore been difficult for the conventional constant-voltage-driven vibrating gyro to maintain the constant vibrating speed irrespective of the angular velocity applied to the gyro. This problem is hereunder described with reference to Fig. 3 which is an overall equivalent circuit as an approximation of the H-type vibrating gyro shown in Fig. 2.

In the equivalent circuit shown in Fig. 3, a box 11 surrounded by a one-long-and-one-short dashed line represents an equivalent circuit of a drive unit composed of driving piezoelectric devices 1 and a box 12 also surrounded by a one-long-and-one-short dashed line denotes an equivalent circuit of a Coriolis force detection unit composed of Coriolis-force-detecting piezoelectric devices 2. Impedance $Z_{xe}$ Composed of resistance $R_{xe}$, inductance $M_{xe}$ and capacitance $S_{xe}$ corresponds to an approximate equivalent circuit of a vibration mode (X direction) on the drive side. Impedance $Z_{ye}$ composed of resistance $R_{ye}$, inductance $M_{ye}$ and capacitance $S_{ye}$ corresponds to an approximate equivalent circuit of a vibration mode (Y-direction) on the Coriolis force detection side. The operation of a vibrating gyro may be described as follows with reference to the equivalent circuit shown in Fig. 3. When the vibrating gyro is supplied with a voltage $V_1$ from a drive power source, a current $\dot{X}_0$ will flow in the drive unit 11. If angular velocity $\Omega_0$ is applied to the vibrating gyro in this state, Coriolis force $G_x$ expressed by the following equation will be generated:

$$G_x = - 2 M_{xe} \Omega_0 \dot{X}_0. \qquad (1)$$

Then, a current $\dot{Y}_0$ will flow in the detection unit 12 as an output of the Coriolis force $G_x$, producing a Coriolis force detection output voltage $V_2$.

The overall equivalent circuit shown in Fig. 3 is supplied with the constant voltage $V_1$, but if impedance $Z_{xe}$ changes, the current $\dot{X}_0$ flowing in the drive unit 11 will also change. Spoken in terms of the Vibrating gyro supplied with the constant voltage $V_1$ (i.e., driven with the constant voltage), the vibrational speed of the resonator will change if the mechanical impedance of the gyro varies as a result of application of the angular velocity. As is clear from the above discussion based on the equivalent circuit, it has been difficult for the conventional constant-voltage-driven vibrating gyro to maintain the constant vibrating speed irrespective of the angular velocity. If the vibrational speed varies depending upon the angular velocity applied to the gyro, the latter cannot be detected with high precision for the reason already stated above.

An object of the present invention is, therefore, to provide a vibrating gyro that is capable of driving a resonator at constant vibrating speed irrespective of applied angular velocity and hence is adapted for precise detection of the angular velocity being applied to the gyro. This object is solved by the vibration gyro as disclosed in independent claim 1, and by the method described in independent claim 6. Further advantageous features of the vibration gyro and the method of driving a vibration gyro are evident from the dependent claims.

The present invention solves the aforementioned problems of the prior art by driving a driving piezoelectric device with a constant AC current.

When the driving piezoelectric device is driven with the constant AC current, the resonator will always vibrate at constant speed even if variations occur in the mechanical impedance of the vibrating gyro as a result of application of the angular velocity. This enables precise detection of the angular velocity since the constancy of vibrational speed upon driving provides a certain constant linear relationship between the angular velocity applied to the gyro and the Coriolis force that is created in it.

Other and further objects, features and advantages of the present invention will appear more fully from the following description taken in connection with the accompanying drawings.

Fig. 1 is a block diagram of a vibrating gyro according to one embodiment of the present invention;

Fig. 2 is a perspective view of a representative H-type vibrating gyro; and

Fig. 3 is an overall equivalent circuit diagram of an H-type vibrating gyro.

An embodiment of the present invention is described hereinafter with reference to Fig. 1. The vibrating gyro of the present invention employs a resonator 3 which is essentially the same as shown in Fig. 2 in connection with the prior art. What is characteristic of the present invention is that the resonator 3 is furnished with four piezoelectric devices 5 for detecting excited vibration that are in one-to one correspondence with driving piezoelectric devices 1, thereby forming a self-exciting oscillation circuit that uses output voltages of excited-vibration-detecting piezoelectric devices 5 to produce a drive voltage for the driving piezoelectric devices 1. At the same time, a constant current circuit 6 is incorporated in the self-exciting oscillation circuit to ensure that the piezoelectric devices 1 will be driven by a constant AC current output having a constant amplitude. The self-exciting oscillation circuit formed in the embodiment shown in Fig. 1 includes a low-pass filter 7, a root-mean-square (RMS) DC converter 8 and a multiplier 9. The low-pass filter 7 rejects harmonic components from an AC voltage detected by the piezoelectric devices 5. The RMS DC converter 8 converts a filtered AC voltage into a root-mean-squared DC voltage, for example, by inverting minus half-waves with an operational amplifier and diodes and then rectifying the inverted voltage with a filter. The multiplier 9 has a function to supply the constant current circuit 6 with a regulated voltage on the basis of the filtered AC voltage and the root-mean-squared DC voltage. For example, "Internal trimming high-precision IC multiplier", AD632 and AD534 manufactured by Analog devices Inc. and "Analog multiplier", NJM4200 manufactured by New Japan Radio Co., Ltd. can be used as the multiplier 9.

In the constant current circuit 6, the output of an operational amplifier $A_1$ is fed back to the negative input thereof through a resistance $R_4$ (e.g. 11 k$\Omega$). A voltage generated at an end of a resistance $R_3$ (e.g. 1 k$\Omega$) is divided by $R_2$ (e.g. 10 k$\Omega$) and $R_5$ (e.g. 10 k$\Omega$) and positively fed back to the operational amplifier $A_1$. An additional operational amplifier $A_2$ is included in the positive feedback circuit so as to reduce a possible current error.

In the vibrating gyro having the circuit configuration described above, the driving piezoelectric devices 1 attached to the resonator 3 are oscillated by the self-excitation and driven with the constant AC current. If the resonator 3 is vibrated by driving the piezoelectric devices 1 with the constant AC current, its vibrational speed will not change in spite of the angular velocity being applied to the vibrating gyro. This is because the "constant current driving" means that the current $\dot{X}_0$ flowing in the drive unit 3 in the overall equivalent circuit shown in Fig. 3 remains constant even if impedance $Z_{xe}$ varies. Since the current $\dot{X}_0$ corresponds to the vibrational speed of the resonator, the "constant current driving" means that the resonator of the vibrating gyro is vibrating at the constant speed. If the vibrational speed is constant, a constant linear relationship is always maintained between the angular velocity and the Coriolis force as suggested by the equation (1), thereby enabling precise detection of the angular velocity applied to the gyro.

In the above embodiment, the driving piezoelectric devices 1 are driven with the constant AC current in the self-exciting oscillation mode.

It is also to be mentioned that the concept of the present invention is applicable not only to the H-type vibrating gyro but also to a tuning fork type vibrating gyro, tuning bar type vibrating gyro, etc.

As described on the foregoing pages, the vibrating gyro of the present invention is driven with the constant AC current and this enables the resonator to be driven at the constant vibrating speed irrespective of the angular velocity being applied to it, thereby improving the precision of angular velocity detection.

**Claims**

1. A vibration gyro, comprising:
    a) a resonator (3);
    b) driving piezoelectric means (1) attached to said resonator (3) for vibrating said resonator (3) in the X-direction of a resonator-fixed XYZ-coordinate system;
    c) second detecting piezoelectric means (2) for detecting a vibration in the Y-direction generated by a Coriolis force created by an angular velocity around the Z-axis; and
    d) a driving circuit for driving said driving piezoelectric means (1);
    **characterized** by
    e) first detecting piezoelectric means (5) attached to said resonator (3) for detecting an excited vibration of said resonator (3) in the X-direction; and
    f) a current driving circuit (6,7,8,9) for said driving circuit for producing a constant AC drive current for said driving piezoelectric means (1) by using the AC output voltage of said first detecting piezoelectric means (5).

2. A vibrating gyro as claimed in claim 1, wherein said resonator (3) is an H-type resonator, said driving piezoelectric means (1) comprises four driving piezoelectric devices attached to respective four legs of said H-type resonator, said first detecting piezoelectric means (5) comprises four first detecting piezoelectric devices attached to four respective legs of said H-type resonator and said driving (1) and first detecting (5) piezoelectric means are in one-to-one correspondence.

3. A vibrating gyro as claimed in one of the preceding claims, wherein said current driving circuit comprises:
    - a voltage regulation circuit (7,8,9) for producing a regulated AC voltage by using said AC output voltage of said first detecting piezoelectric means (5); and
    - a constant current circuit (6) for producing said constant AC drive current by using said regulated AC voltage.

4. A vibrating gyro as claimed in claim 3, wherein said voltage regulation circuit comprises:
    - a low-pass filter (7) for rejecting harmonic components from said output voltage of said first detecting piezoelectric means (5) to produce a filtered AC voltage;
    - a DC converter (8) for converting said filtered AC voltage into a DC voltage through performing a root-mean-square operation; and

    - a multiplier (9) for producing said regulated AC voltage on the basis of said filtered AC voltage and said DC voltage.

5. A driving method for a vibrating gyro which is driven by driving piezoelectric means (1) connected to an AC driving voltage and attached to a resonator (3), comprising the steps of:
    a) detecting with first detecting piezoelectric means (5) an excited vibration of said resonator (3) to obtain an AC voltage;
    b) using said detected AC voltage to produce a constant AC drive current;
    c) driving said resonator (3) with said constant AC drive current.

6. A driving method for a vibrating gyro as claimed in claim 5, further comprising the steps of:
    d) producing a regulated AC voltage by using said detected AC voltage; and
    e) producing said constant AC drive current by using said regulated AC voltage.

**Patentansprüche**

1. Schwingkreisel, mit
    a) einem Resonator (3);
    b) piezoelektrischen Antriebsmitteln (1), die an dem Resonator (3) befestigt sind, um den Resonator (3) in der X-Richtung eines resonatorfesten X-Y-Z-Koordinatensystems in Schwingung zu versetzen;
    c) zweiten piezoelektrischen Erfassungsmitteln (2) für die Erfassung einer Schwingung in der Y-Richtung, die durch eine von einer Winkelgeschwindigkeit um die Z-Achse verursachten Corioliskraft erzeugt wird; und
    d) einem Antriebsstromkreis für den Antrieb der piezoelektrischen Mittel (1);
    **gekennzeichnet** durch
    e) erste piezoelektrische Erfassungsmittel (5), die an dem Resonator (3) befestigt sind, um eine in dem Resonator (3) in der X-Richtung erregte Schwingung zu erfassen; und
    f) einen Steuerstromkreis (6,7,8,9) für den Antriebsstromkreis zur Erzeugung eines konstanten Antriebswechselstroms für die piezoelektrischen Antriebsmittel (1) durch Verwendung der Ausgangswechselspannung der ersten piezoelektrischen Erfassungsmittel (5).

2. Schwingkreisel gemäß Anspruch 1, bei dem der Resonator (3) H-förmig ausgebildet ist, und bei dem die piezoelektrischen Antriebsmittel (1) vier piezoelektrische Antriebsvorrichtungen umfassen, die jeweils an den vier Schenkeln des H-förmigen Resonators befestigt sind, wobei die ersten piezoelektrischen Erfassungsmittel (5) vier erste piezoelektrische Erfassungsvorrichtungen umfassen, die jeweils an den vier Schenkeln des H-förmigen Resonators befestigt sind, und wobei die Antriebsmittel (1) und ersten piezoelektrischen Erfassungsmittel (5) sich im Verhältnis 1 : 1 entsprechen.

3. Schwingkreisel gemäß einem der vorangegangenen Ansprüche, bei dem der Steuerstromkreis folgendes umfaßt:
   - einen Spannungsregelkreis (7,8,9) zur Erzeugung einer geregelten Wechselspannung durch Verwendung der Ausgangswechselspannung der ersten piezoelektrischen Erfassungsmittel (5); und
   - einen Gleichstromkreis (6) zur Erzeugung des konstanten Antriebswechselstromes durch Verwendung der geregelten Wechselspannung.

4. Schwingkreisel gemäß Anspruch 3, bei dem der Spannungsregelkreis folgendes umfaßt:
   - ein Tiefpaßfilter (7) zur Unterdrückung von harmonischen Komponenten aus der Ausgangsspannung der ersten piezoelektrischen Erfassungsmittel (5) zur Erzeugung einer gefilterten Wechselspannung;
   - einen Gleichspannungwandler (8) zur Umwandlung der gefilterten Wechselspannung in eine Gleichspannung durch Bildung des quadratischen Mittelwertes; und
   - einen Verstärker (9) zur Erzeugung der geregelten Wechselspannung auf der Grundlage der gefilterten Wechselspannung und der Gleichspannung.

5. Verfahren zum Antrieb eines Schwingkreisels, der mittels piezoelektrischer Antriebsmittel (1) angetrieben wird, die an eine Antriebswechselspannung angeschlossen und an einem Resonator (3) befestigt sind, welches die folgenden Schritte umfaßt:
   a) Erfassung einer in dem Resonator (3) mittels der ersten piezoelektrischen Erfassungsmittel (5) erregten Schwingung, um eine Wechselspannung zu erhalten;
   b) Verwendung der erfassten Wechselspannung zur Erzeugung eines konstanten Antriebswechselstroms;
   c) Antreiben des Resonators (3) mit dem konstanten Antriebswechselstrom.

6. Verfahren zum Antrieb eines Schwingkreisels gemäß Anspruch 5, das des weiteren die folgenden Schritte umfaßt:
   d) Erzeugung einer geregelten Wechselspannung durch Verwendung der erfaßten Wechselspannung; und
   e) Erzeugung des konstanten Antriebswechselstromes durch Verwendung der geregelten Wechselspannung.

## Revendications

1. Gyroscope à vibrations comportant :
   a) un résonateur (3) ;
   b) un moyen piézoélectrique d'entraînement (1) attaché audit résonateur (3) pour entraîner en vibration ledit résonateur (3) dans la direction X d'un système de coordonnées XYZ fixé au résonateur ;
   c) un deuxième moyen piézoélectrique de détection (2) pour détecter une vibration dans la direction Y produite par la force de Coriolis due à une vitesse angulaire autour de l'axe Z ; et
   d) un circuit de commande pour commander ledit moyen piézoélectrique d'entraînement (1) ;
   caractérisé par
   e) un premier moyen piézoélectrique de détection (5) attaché audit résonateur (3) pour détecter une vibration d'excitation dudit resonateur (3) dans la direction X ; et
   f) un circuit de commande a courant (6, 7, 8, 9) pour ledit circuit d'entraînement produisant un courant alternatif de commande constant pour ledit moyen piézoélectrique d'entraînement (1) en utilisant la tension de sortie à CA dudit premier moyen (5) de détection piézoélectrique.

2. Gyroscope à vibrations selon la revendication 1, dans lequel ledit résonateur (3) est un résonateur du type H, ledit moyen piézoélectrique d'entraînement (1) comportant quatre dispositifs piézoélectriques d'entraînement attachés aux quatres pieds respectifs dudit résonateur du type H, ledit premier moyen piézoélectrique (5) de détection comportant quatre premiers dispositifs piézoélectriques de détection attachés respectivement aux quatre pieds dudit résonateur du type H, lesdits premiers moyens piézoélectriques d'entraînement (1) et de détection (5) étant en correspondance univoque.

3. Gyroscope à vibrarions selon l'une des revendications précédentes, dans lequel ledit circuit de commande à courant comporte :
   - un circuit de régulation de tension (7, 8, 9) pour produire une tension à CA régulée en utilisant ladite tension de sortie à CA dudit premier moyen piézoélectrique (5) de détection ; et

- un circuit à courant constant (6) pour produire ledit courant alternatif constant de commande en utilisant ladite tension à CA régulée.

4. Gyroscope à vibrations selon la revendication 3, dans lequel ledit circuit de régulation de tension comporte :

- un filtre passe-bas (7) pour bloquer les composantes harmoniques de ladite tension de sortie dudit premier moyen piézoélectrique de détection (5) pour produire une tension à CA filtrée ;
- un convertisseur à CC (8) pour convertir ladite tension à CA filtrée en une tension à CC par une opération de conversion de valeur efficace ; et
- un multiplicateur 9 pour produire ladite tension à CA régulée en fonction de ladite tension à CA filtrée et de ladite tension à CC.

5. Procédé d'entraînement d'un gyroscope à vibrations entraîné par un moyen piézoélectrique d'excitation (1) connecté à une tension d'entraînement à CA et attaché à un résonateur (3) et comportant les étapes qui consistent :

a) à détecter par un premier moyen piézoélectrique de détection (5) une vibration d'excitation dudit résonateur (3) pour obtenir une tension à CA ;

b) à utiliser ladite tension à CA detectée pour produire un courant alternatif de commande constant ;

c) à entraîner ledit résonateur (3) par ledit courant alternatif constant de commande.

6. Procédé d'entraînement d'un gyroscope à vibrations selon la revendication 5, comportant en outre les étapes qui consistent :

d) à produire une tension à CA régulée en utilisant ladite tension à CA détectée ; et

e) à produire ledit courant alternatif constant de commande en utilisant ladite tension à CA régulée.

## FIG. 1

MULTIPLIER 9

$R_1$  $R_4$  $A_1$  $R_3$

$R_2$  $R_5$  $A_2$

6  3  5  5  1  5  5

RMS DC CONVERTER 8

LPF 7

## FIG. 2
## PRIOR ART

3

1  2  2  1

1  2  2  1

X  Y

$\Omega$

Z

## FIG. 3

$\dot{X}_0$  $Z_{xe}$  [F]  $Z_{ye}$  $\dot{Y}_0$

$V_1$  $C_{d1}$  $R_{xe}$  $M_{xe}$  $S_{xe}$  $\begin{bmatrix} 0 & G_y \\ G_x^{-1} & 0 \end{bmatrix}$  $R_{ye}$  $M_{ye}$  $S_{ye}$  $C_{d2}$  $V_2$

$F_{x0}$

$1 : A_x$  $A_y : 1$

11  12

$G_x = -2M_{xe}\Omega_0\dot{X}_0$

$G_y = -2M_{ye}\Omega_0\dot{Y}_0$